# EUROPEAN PATENT APPLICATION

(11) **EP 2 159 578 A1**
(43) Date of publication of application: **03.03.2010**
(21) Application number: 08765286.3
(22) Date of filing: 06.06.2008
(51) Int. Cl.: G01P 3/487, B60B 35/18, F16C 19/18, F16C 41/00

(54) **HUB UNIT**

(30) Priority: 08.06.2007 JP 2007152959; 12.06.2007 JP 2007155254; 29.06.2007 JP 2007172038
(71) Applicant: JTEKT Corporation, Osaka-shi Osaka 542-8502 (JP)
(72) Inventor: MASUDA, Yoshinori, Osaka-shi Osaka 542-8502 (JP)
(74) Representative: Schaeberle, Steffen
(86) International application number: PCT/JP2008/060473
(87) International publication number: WO 2008/152987

(57) **Abstract**

There is provided a hub unit which includes a rotation speed detector having a pulser ring which includes a detected portion and rotates together with a rotating-side member, a head portion of a sensor for detecting a change in rotation speed of a wheel via the detected portion of the pulser ring, a cover member which includes a fixed portion which is fixedly fitted in a stationary-side member and an annular cover portion which extends from an end of the fixed portion towards the rotating-side member and a seal portion which is formed between an inner circumferential end of the cover portion and the rotating-side member.

## Description

### Technical Field

The present invention relates to a hub unit and more particularly to a hub unit which includes a rotation speed detector for detecting a rotation speed of a wheel mounted on an axle, for example.

### Background Art

In general, a rotation speed detector (a rotation detector) for detecting a wheel rotation speed is mounted on a hub unit of a vehicle such as an automotive vehicle. The rotation detector is used as an information input unit for an anti-lock braking system (ABS) of an automotive vehicle, for example. For example, there is known a rotation detector which is fixed to an inner ring side of a hub unit and which has a pulse generator (a pulser ring) which rotates together with an inner ring and a sensor which is held in a stationary state to a sensor holder (a cover member) which is fixed to an outer ring side of the hub unit, whereby a change in rotation of the pulser ring which rotates in association with rotation of a wheel is detected by the sensor (refer to Patent Documents 1, 2, 3).

Patent Document 1: JP-A-2005-241351
Patent Document 2: JP-A-2005-315632
Patent Document 3: JP-A-2000-221203

It is necessary to detect rotation speeds of the wheels with high accuracy in order for the anti-lock braking system of the vehicle to operate accurately. However, when foreign matters (sand, mud, dirt, rain water and the like) intrude the peripheral portion of the sensor, the foreign matters accumulate or adhere to the sensor and/or the pulser ring, which causes a fear that the detection accuracy of the sensor is reduced or that an output from the sensor is interrupted.

Patent Document 1 describes a technique in which a head of a sensor can be mounted in an accommodation pocket (a holding portion) in a clip-on manner by the elastic force of a clip portion and an annular ring portion of the sensor holder is fitted on an outer circumferential surface of an inner side end portion of an outer member (an outer ring) so as to be mounted thereon. Patent Document 2 describes a technique in which a length of a claw portion which abuts a lower end (a distal end) of a front surface of a sensor with the sensor inserted into an accommodation pocket is specified, and similar to Patent Document 1, an annular ring portion of the sensor holder is fitted on an outer circumferential surface of an inner side end portion of an outer member (an outer ring) so as to be mounted thereon.

Incidentally, in the construction of an axle, efforts have been made to reduce the width of a bearing in a hub unit by restricting an axial dimension of the bearing. As is described in the techniques of the patent documents above, however, in the type of rotation speed detector in which the annular ring portion of the sensor holder is fitted on the outer circumferential surface of the inner side end portion of the outer member (the outer ring) so as to be mounted thereon, in order to fix the sensor holder in an ensured manner, a sufficient holding force needs to be secured by providing a certain fitting dimension in the axial direction. However, when attempting to secure a sufficient fitting dimension between the outer member and the sensor holder (the annular cover member), a space has to be defined between the outer circumferential surface of the outer member and a vehicle body, leading to a fear that defining the space affects the mounting of the outer member itself.

### Disclosure of the Invention

### Problem that the Invention is to Solve

The invention has been made in view of the situations described above, and an object thereof is to provide a hub unit which prevents the intrusion of foreign matters into a peripheral portion of a sensor of a rotation speed detector. Another object of the invention is to provide a hub unit which enables a stable mounting of a rotation speed detector even in the event that a width of a bearing in the hub unit is attempted to be reduced by restricting an axial dimension of the bearing.

### Means for Solving the Problem and Advantage of the Invention

With a view to solving the problem, according to the invention, there is provided a hub unit having a stationary-side member mounted on a vehicle body side so as not to rotate for supporting a wheel rotatably on a vehicle body, a rotating-side member disposed concentrically with the stationary-side member and mounted on a wheel side so as to rotate together with the wheel on a raceway surface of the stationary-side member via rolling elements, and a rotation speed detector mounted at vehicle inner side end portions of the rotating-side member and the stationary-side member for detecting a change in rotation speed of the wheel, **characterized in that**
the rotation speed detector comprises:
a pulser ring including a detected portion and adapted to rotate together with the rotating-side member;
a head portion of a sensor for detecting a change in rotation speed of the wheel via the detected portion of the pulser ring; and
a cover member comprising a fixed portion fitted in the stationary-side member so as to be fixed thereto and an annular cover portion which extends from one end of the fixed portion towards the rotating-side member, and in that
a seal portion is formed between an inner circumferential end of the cover portion and the rotating-side member.

According to the invention, the annular cover member which holds and fixes the head portion of the sensor of the rotation speed detector may be fixedly fitted in an inner circumferential surface of the outer ring. According to this configuration, compared with a case in which the cover member is fitted on an outer circumferential surface of the outer ring, a smaller rotation speed detector can be mounted, thereby making it possible to realize a reduction in production costs. In addition, since an axial dimension of an outer ring fixed portion which is fitted in the inner circumferential surface of the outer ring can be secured sufficiently even in the event that a width of a bearing in the hub unit is attempted to be reduced by restricting an axial dimension of the bearing, the rotation speed detector can be mounted stably.

The seal portion is provided in the rotation speed detector for sealing a gap between the pulser ring and the cover member at a vehicle inner side end portion in the axial direction of a rolling element disposition space which is defined between the rotating-side member and the stationary-side member (that is, the outer ring and inner ring). Namely, Since the pulser ring and the cover member are disposed so as to face each other in the rolling element disposition space by the cover member being fixed to the stationary-side member, the rolling element disposition space can be sealed rationally without involving the stationary-side member and the rotating-side member (the inner ring and the outer ring) by, for example, forming integrally the seal portion on the pulser ring and the cover member. Hence, not only can intrusion of foreign matters into the peripheral portion of the sensor of the rotation speed detector be prevented effectively, but also space saving in the rolling element disposition space can be realized. Thus, the number of components involved can be reduced and the assembling capability of components involved can be enhanced, thereby making it possible to realize a further reduction in production costs.

As a specific mode of the seal portion, the seal portion can include a first seal member which is fixed to a vehicle outer side of the detected portion of the pulser ring and an outside diameter end portion of which is incorporated in a seal groove formed on an inner circumferential portion of the outer ring fixed portion of the cover member and a second seal member which is fixed to a vehicle outer side of the cover portion of the cover member and an inside diameter end portion of which is incorporated in a seal groove formed on the pulser ring or the inner ring. Normally, since a lubricant (for example, grease) is applied to the rolling element disposition space, the first seal member can seal in the lubricant on an inner side of the detected portion of the pulser ring, and the second seal member can prevent effectively intrusion of foreign matters into the rolling element disposition space on an outer side of the detected portion.

The cover member of the rotation speed detector can be configured so that a vehicle inner side end face in the axial direction of the cover portion forms the same plane as that formed by a vehicle inner side end face in the axial direction of the outer ring. Normally, the head portion of the sensor is fixed by being pushed in from a radial direction with respect to the holding portion of the cover member. As this occurs, since the cover portion and the vehicle inner side end face of the outer ring form the same plane, the head portion can simply be pushed into the holding portion without being interrupted by the end portion of the outer ring.

The holding portion of the cover member preferably includes a spring piece which presses the head portion of the sensor from a vehicle inner side in the axial direction to thereby be brought into engagement with an engagement portion formed on the head portion. According to this configuration, since the spring piece presses the head portion from the vehicle inner side, the head portion is also allowed to be received at the vehicle inner side end portion of the outer ring, thereby making it possible for the head portion to be fixedly held in the holding portion in a stable manner. Hence, since the sensor is fixed stably, a reliable detection can be implemented.

Further, in the invention, the cover member desirably comprises:
a cylindrical main body portion in which a sensor mounting hole through which the sensor is inserted is provided in a radial direction; and
a circumferential wall portion which is provided on an axial side of the main body portion to extend radially inwards therefrom and a distal end portion of which is bent along an outer circumferential surface of the axle for a bent portion to be formed at the distal end portion, wherein
a gap is defined between the bent portion and the outer circumferential surface of the axle.

When the hub unit according to the invention is configured in the way described above, the gap (which is a labyrinth gap) is defined between the distal end portion of the circumferential wall portion of the cover member and the outer circumferential surface of the axle. The size of the gap is 0.1 to 0.5 mm, for example. The direction in which the distal end portion of the circumferential wall is bent may be towards either the vehicle outer side or the vehicle inner side. A wide range of the outer circumferential surface of the axle is covered by the bent portion. By this configuration, foreign matters which flow down along the outer circumferential surface of the axle are prevented from intruding the peripheral portion of the senor without interrupting the rotation of the axle. Since the bent portion and the axle are held in a non-contact condition, there is caused no such situation that the axle is worn or that the mounting position of the cover is shifted. As a result of what has been described above, a fear is reduced that the foreign matters accumulate on the peripheral portion of the sensor or foreign matters adhere to the sensor or the pulser ring, thereby making it possible to detect the rotation speed of the wheel with high accuracy over a long period of time.

The axle can be made to have a straight outer circumferential portion an outside diameter of which stays the same in the axial direction and a tapered outer circumferential portion an outside diameter of which increases continuously towards the vehicle inner side.
The circumferential wall portion can be made to be disposed directly above the straight outer circumferential portion of the axle.
The bent portion can be made to comprise a first bent portion which is bent towards the vehicle inner side along the straight outer circumferential portion of the axle and a second bent portion which is bent towards the vehicle inner side along the tapered outer circumferential portion from a position lying directly above a connecting portion on the first bent portion between the straight outer circumferential portion and the tapered outer circumferential portion of the axle.

Since, even though the straight outer circumferential portion and the tapered outer circumferential portion are provided on the axle, both the portions of the axle are covered by the first and second bent portions, intrusion of foreign matters is prevented.

An inclination angle of the second bent portion relative to the first bent portion is desirably larger than an inclination angle of the tapered outer circumferential portion relative to the straight outer circumferential portion of the axle.

This can eliminate a fear that the tapered outer circumferential portion of the axle interferes with the second bent portion.

A circumferential length of the sensor mounting hole can be made to be formed the same as a width of the sensor, and a stopper can be made to be formed on the sensor so as to project in a width direction to thereby be brought into abutment with the main body portion when the sensor is inserted through the sensor mounting hole in the main body portion.

This facilitates a radial positioning of the sensor when the sensor is mounted in the cover member and prevents the sensor which is inserted into the sensor mounting hole from being shifted in a circumferential direction.

Further, in the invention, the cover member desirably comprises:
a cylindrical main body portion in which a sensor mounting hole through which the sensor is inserted is provided in a radial direction;
a circumferential wall portion which is provided on an axial side of the main body portion to extend radially inwards therefrom and which has a seal member mounted at a distal end portion thereof; and
a guide wall portion which is provided on the other axial side of the main body portion to extend radially inwards therefrom in parallel with the circumferential wall portion for guiding the sensor inserted into the sensor mounting hole in the main body portion,
the seal member of the circumferential wall portion being brought into sliding contact with the outer circumferential surface of the axle with the main body portion mounted on a vehicle body.

The hub unit according to the invention is configured as described above, and the seal portion is mounted at the distal end portion of the circumferential wall portion of the cover member in which the sensor is mounted. This prevents foreign matters which flow down along the outer circumferential surface of the axle from intruding the peripheral portion of the sensor. Because of this, a fear that foreign matters accumulate or adhere to the sensor or the pulser ring is reduced, thereby making it possible to detect the rotation speed of the wheel with high accuracy over a long period of time.

A stopper portion with which the sensor inserted into the sensor mounting hole in the main body portion is brought into abutment can be provided at a distal end portion of the guide wall portion. By the provision of the stopper portion, the positioning of the sensor in the radial direction can be facilitated.

The guide wall portion is provided to hold the sensor inserted in the sensor mounting hole by clamping the sensor between itself and the circumferential wall portion, and an engagement portion can be provided on the circumferential wall portion to resiliently press the clamped sensor against the guide wall portion side and is brought into engagement with the sensor in a pressed condition.

Since the sensor is pressed towards the guide wall portion by the provision of the engagement portion, the positioning of the sensor in the axial direction can be facilitated. Moreover, by the engagement portion provided on the circumferential wall portion being brought into engagement with the sensor, not only is the positioning of the sensor in the axial direction ensured further, but also the sensor is prevented from being shifted in the radial direction.

A circumferential length of the sensor mounting hole can be formed the same as a width of the sensor. By this configuration, the sensor inserted into the sensor mounting hole is prevented from being shifted in the circumferential direction, whereby a circumferential positioning of the sensor is implemented.

Further, the cover member can be fabricated by including:
a connecting portion forming step of forming a cylindrical connecting portion;
a circumferential wall portion forming step of forming a circumferential wall portion by bending radially inwards an axial end portion of the connecting portion; and
a guide wall portion forming step of welding an outer circumferential surface of a disc-like guide wall portion to an inner circumferential surface of the connecting portion in parallel.

### Brief Description of the Drawings

[Fig. 1] A drawing showing an example of a sectional construction of a hub unit according to a first embodiment of the invention.
[Fig. 2] An exploded perspective view showing an example of a rotation speed detector.
[Fig. 3] An enlarged view of a portion A in Fig. 1.
[Fig. 4] An enlarged view of a portion B in Fig. 2.
[Fig. 5] An enlarged view of a portion C in Fig. 2.
[Fig. 6] A front sectional view of a hub unit 150 in which a rotation speed detector 100 of a second embodiment of the invention is mounted.
[Fig. 7] An exploded view of the rotation speed detector 100 as viewed from a vehicle inner side of the hub unit according to the second embodiment.
[Fig. 8] A perspective view of a cover member 117 with a sensor 116 removed therefrom.
[Fig. 9] A front view of the rotation speed detector 100.
[Fig. 10] A side sectional view of the same detector.
[Fig. 11]An enlarged view of a main part of Fig. 10.
[Fig. 12] A side sectional view of a rotation speed detector 100 according to an modified example to the second embodiment.
[Fig. 13] A front sectional view of a hub unit 250 in which a rotation speed detector 200 of a hub unit according to a third embodiment of the invention is mounted.
[Fig. 14] An exploded perspective view of the rotation speed detector 200 as viewed from a vehicle outer side.
[Fig. 15] A perspective view of a cover member 217 with a sensor 216 removed therefrom.
[Fig. 16] A front view of the rotation speed detector 200.
[Fig. 17] A side sectional view of the same detector.
[Fig. 18] A process diagram showing a fabrication method of the cover member 217.

### Best Mode for Carrying out the Invention

### (First Embodiment)

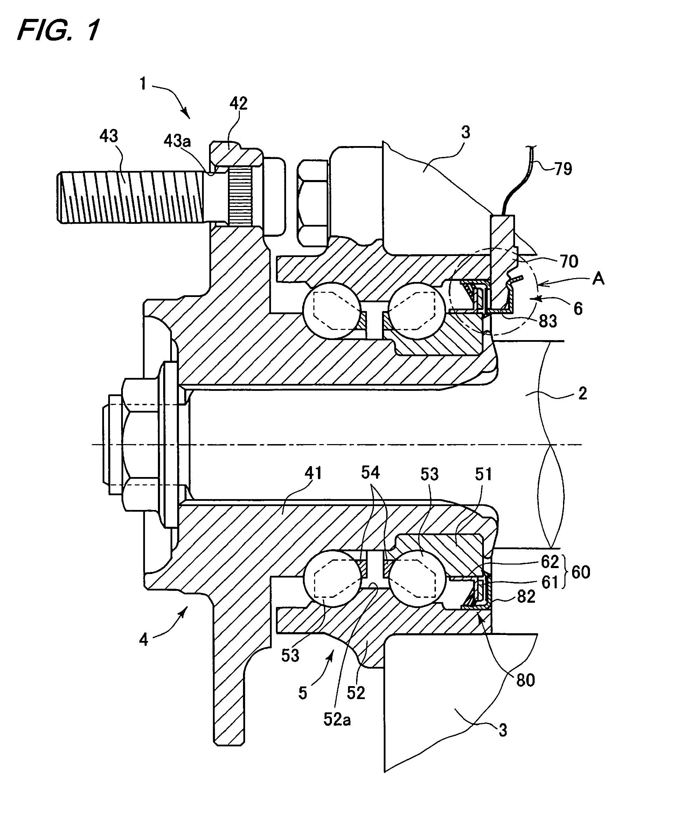

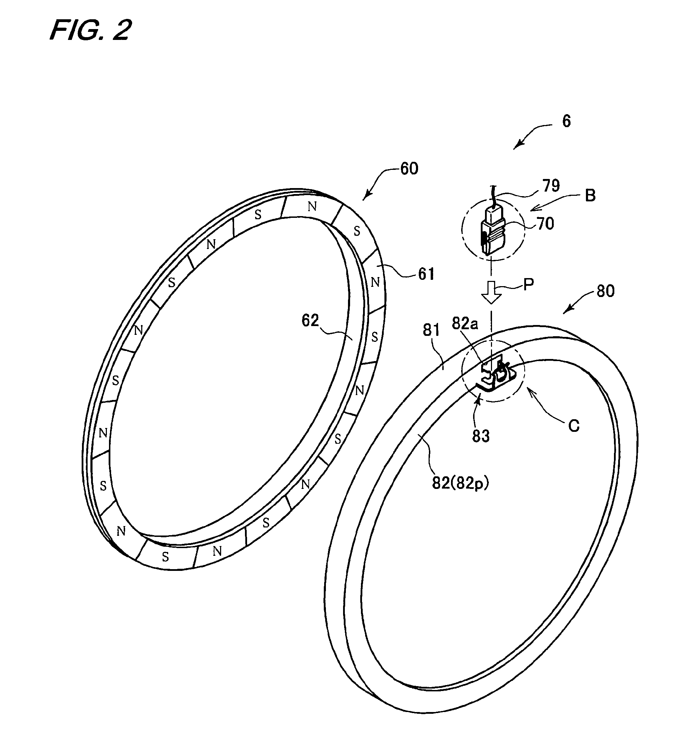

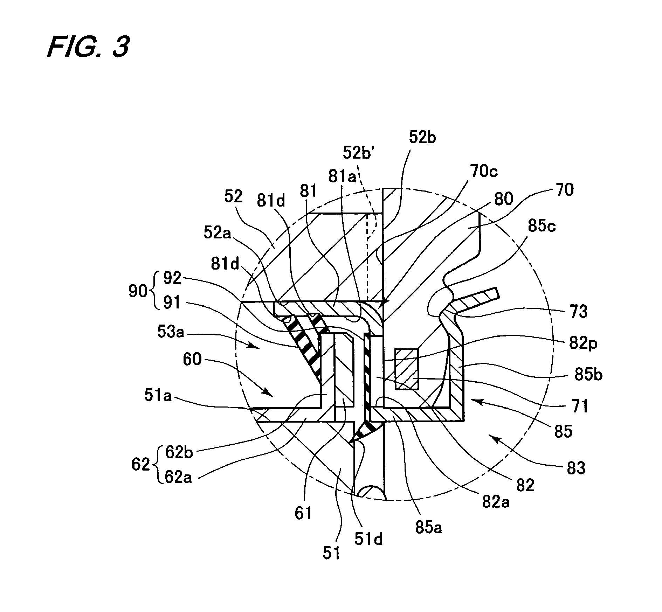

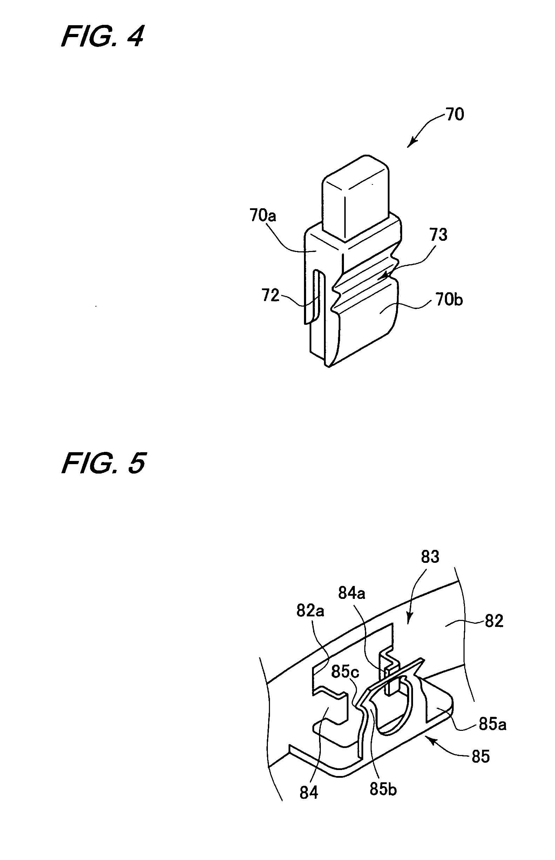

Hereinafter, an embodiment of a hub unit according to the invention will be described by reference to the drawings. Fig. 1 is a drawing showing an example of a sectional construction of a hub unit according to a first embodiment of the invention, Fig. 2 is an exploded perspective view showing an example of a rotation speed detector, Fig. 3 is an enlarged view of a portion A in Fig. 1, Fig. 4 is an enlarged view of a portion B in Fig. 2, and Fig. 5 is an enlarged view of a portion C in Fig. 2. Note that in Fig. 1, a left-hand side of the figure denotes a vehicle outer side, and a right-hand side denotes a vehicle inner side. When used in this specification, a rotating-side member includes concepts of an axle, a constant velocity joint, a hub wheel and an inner ring, and a stationary-side member includes concepts of an outer ring and a vehicle body side member.

As is shown in Fig. 1, a hub unit 1 is interposed between a drive axle 2 and an axle case 3, so as to support rotatably a wheel (the drive axle 2), not shown, relative to a vehicle body (the axle case 3). The hub unit 1 includes a hub wheel 4, a rolling bearing 5 and a rotation speed detector 6 which is mounted at vehicle inner side end portions of an inner ring and an outer ring of the rolling bearing 5 for detecting a change in rotation speed of the wheel.

The hub wheel 4 has a shaft portion 41 which is spline fitted on the drive axle 2 and a hub flange 42 for fixing the wheel, not shown, at a vehicle outer side end portion of the shaft portion 41. Bolt insertion holes 43a through which bolts 43 are inserted are formed in the hub flange 42, and the wheel is fixed via the bolts 43.

The rolling bearing 5 is made up of a double row outwardly oriented angular contact bearing. The rolling bearing 5 includes an outer ring 52 which is mounted on a vehicle body side so as not to rotate and an inner ring 51 which is disposed concentrically with the outer ring 52 and which is mounted on a wheel side so as to rotate together with the wheel via rolling elements 53 (hereinafter, also referred to as balls 53) which roll on an inner circumferential surface 52a of the outer ring 52 as a raceway surface. Specifically, the rolling bearing 5 utilizes part of an outer circumferential surface of the shaft portion of the hub wheel 4 as a vehicle outer side inner ring and includes the inner ring 51 which is press fitted on an outer circumference of the shaft portion 41 and which constitutes a vehicle inner side single row inner ring, the outer ring 52 which is press fitted in an inner circumference of the axle case 3 and which has double (two) raceway grooves, the plurality of balls 53 which are installed in double rows, and two crown type cages 54, 54. Consequently, in this embodiment, a form is adopted in which the outer 52 ring stays stationary while the inner ring 51 (the hub wheel 4) is allowed to rotate.

Next, the rotation speed detector 6 will be described. As is shown in Fig. 2, the rotation speed detector 6 includes an annular pulser ring 60 on which magnetic poles (N poles, S poles) having different polarities are formed to be aligned alternately in a circumferential direction, a head portion 70 of a sensor for detecting a change in rotation of the pulser ring 60 and an annular cover member 80 which holds the head portion 70. Namely, the head portion 70 of the sensor detects a change in rotation of the pulser ring 60 to thereby detect a change in rotation of the wheel.

As is shown in Figs. 2 and 3, the pulser ring 60 has a pulser ring supporting portion 62 which includes a cylindrical inner ring fixed portion 62a which is fixedly fitted on an outer circumferential surface 51a of the inner ring 51 and a flange portion 62b which is provided to project radially outwards from the inner ring fixed portion 62a in a flange-like manner, and a pulser ring main body 61 on which N poles and S poles are alternately magnetized and which constitutes a detected portion which is bonded and fixed to an end face of the flange portion 62b. The pulser ring 60 is press fitted on an outer circumference of the inner ring 51 of the rolling bearing 5 so as to be fixed at a vehicle inner side end portion in an axial direction and rotates together with the inner ring 51 (refer to Fig. 1).

Returning to Fig. 2, the head portion 70 is formed from a polymeric material such as a resin and is formed by insert molding a sensor 71 (refer to Fig. 3) such as an IC (Integrated Circuit) chip having a magnetic circuit. The sensor 71 can detect rotation of the pulser ring 60 by detecting a voltage generated in the magnetic circuit by a change in magnetic flux density by the rotation of the pulser ring 60. A lead wire 79 is pulled out of the head portion 70.

The cover member 80 has a cylindrical outer ring fixed portion 81 and an annular cover portion 82 which extends radially inwards from a vehicle inner side end portion of the outer ring fixed portion 81. An opening 82a is formed in a predetermined circumferential position of the cover portion 82 so as to penetrate therethrough in a thickness direction, and a holding portion 83 is provided to correspond to the opening 82a for holding the head portion 70 on the vehicle inner side.

Specifically, as is shown in Fig. 3, in the cover member 80, the outer ring fixed portion 81 is provided to extend in the axial direction (towards the vehicle outer side) from an outer circumferential edge of the cover portion 82 and is fixedly fitted in the inner circumferential surface 52a of the outer ring 52. The cover portion 82 is disposed on the vehicle outer side to face the pulser ring main body 61 (the detected portion) of the pulser ring 60 in the axial direction, and the holding portion 83, which fixedly holds the head portion 70, is provided on an opposite side to the pulser ring main body 61 (the detected portion) across the cover portion 82 in the axial direction.

By this configuration, when the head portion 70 is held by the holding portion 83, rotation of the pulser ring 60 is detected via the opening 82a. Since the outer ring fixed portion 81 is fitted in the inner circumferential surface 52a of the outer ring 52 so as to be fixed thereto, a certain fitting dimension in the axial direction can easily be secured, thereby making it possible to ensure a sufficient fitting force. When the head portion 70 is mounted in the holding portion 83, the head portion 70 is made to be pushed into the holding portion 83 from a radial direction (a direction indicated by an arrow P in Fig. 2) of the cover member 80 so as to be fixed in place therein.

Here, in the rotation detector 6 according to the embodiment, a seal member 90 for sealing a gap between the pulser ring 60 and the cover member 80 is provided at a vehicle inner side end portion in the axial direction of a rolling element disposition space 53a which is defined between the outer ring 52 and the inner ring 51.

Specifically, the seal portion 90 is formed as an elastic seal member such as a rubber material and includes a first seal member 91 which is bonded and fixed (for example, vulcanization bonded) to the pulser ring 60 side and a second seal member 92 which is bonded and fixed (for example, vulcanization bonded) to the cover member 80 side.

The first seal member 91 is bonded and fixed to a vehicle inner side of the pulser ring main body (the detected portion) of the pulser ring 60, that is, the flange portion 62b and an outside diameter end portion thereof is incorporated in a seal groove 81d formed in an inner circumferential portion 81a of the outer ring fixed portion 81. The first seal member 91 is also incorporated in another seal groove 81d formed in the inner circumferential portion 81a of the outer ring fixed portion 81 at an inside diameter end portion thereof. Consequently, the first seal member 91 which is fixed to the pulser ring 60 is closely attached to the cover member 80 while being deformed elastically and functions to prevent a lubricant such as grease, for example, which is sealed in an interior of the rolling element disposition space 53a from flowing out thereof.

The second seal member 92 is bonded and fixed to a vehicle outer side of the cover portion 82 of the cover member 80 and an inside diameter end portion is incorporated in a seal groove 51d formed in the inner ring 51. However, although the second seal member 92 is not provided in the opening 82a which allows the detected portion and the sensor 71 to face each other therethrough (the second seal member 92 is penetrated so that an opening coinciding with a shape of the opening 82a is formed therein), even in the event that the second seal member 92 is not cut out to the shape of the opening 82a, this affects little the detection accuracy of the sensor 71. Namely, the second seal member 92 which is fixed to the cover member 80 is closely attached to the inner ring 51 while being deformed elastically and has a function to prevent intrusion of water and/or dust into the rolling element disposition space 53a from an exterior space. The intrusion preventive effect becomes larger when the opening 82a is closed by the second seal member 92. In this embodiment, while the seal groove into which the second seal member 92 is incorporated is formed in the inner ring 51, the seal groove may be formed in the pulser ring 60. A configuration may be adopted in which the respective seal members are made to be deformed elastically so that the seal members are pressed against the facing members, whereby the seal grooves 51d, 81d which correspond to the seal members are omitted.

Next, using Figs. 4 and 5, detailed forms of the head portion 70 and the holding portion 83 will be described. As is shown in Fig. 4, the head portion 70 includes groove-like guide rail portions 72, 72 which extend in a longitudinal direction (in a push-in direction in which the head portion 70 is pushed in) on both side portions 70a, 70a, respectively, and an engagement portion 73 which is raised and recessed in a bellows-like manner at an upper portion 70h.

Following what has been described above, as is shown in Fig. 5, the holding portion 83 of the cover member 80 has a pair of guide pieces 84, 84 for guiding the head portion 70 of the sensor 71 which is pushed in along the push-in direction on the vehicle inner side in the axial direction and a spring piece 85 which presses the head portion 70 from the same vehicle inner side so as to be brought into engagement with the engagement portion 73 of the head portion 70. By this configuration, the holding portion 83 can hold the head portion 70 so as to clamp it in the axial direction.

Specifically, the pair of guide pieces 84, 84 rise so as to face each other in the circumferential direction putting the opening 82a in the cover portion 82 therebetween, and end faces 84a, 84a of the guide pieces 84, 84 are formed so as to extend in the longitudinal direction.

The spring piece 85 has a spring base portion 85a which rises from an inner circumferential edge of the cover portion 82 and a spring operating portion 85b which is bent in a radial direction (radially outwards) from the spring base portion 85a. The spring operating portion 85b is formed to include a pressing portion 85c which presses against the engagement portion 73 of the head portion 70 to thereby be brought into engagement therewith. Namely, the spring piece 85 is formed so as to surround from a distal end to the upper portion of the head portion 70 when the head portion 70 is mounted in the holding portion 83.

Next, returning to Fig. 3, a mounting construction of the head portion 70 in the holding portion 83 will be described. As has been described above, the head portion 70 is pushed in radially (refer to Fig. 2) towards the holding portion 83, whereby the head portion 70 is fixed in a predetermined position in the holding portion 83. Specifically, the head portion 70 is held in the holding portion 83 with end portions of the guide pieces 84 of the holding portion 83 fitted in the guide rail portions 72 of the head portion 70. As this occurs, the end faces 84a, 84a of the guide pieces 84 are brought into abutment with or close proximity to bottoms of the guide rail portions 72, 72, whereby the head portion 70 is positioned with respect to the circumferential direction. Since the end portions of the guide pieces 84 enter the groove-like guide rail portions 72 at the same time as the head portion 70 is positioned circumferentially, the head portion 70 is also positioned with respect to the axial direction. By this configuration, when the head portion 70 is pushed in towards the holding portion 83, the head portion 70 is guided in the push-in direction via the guide rail portions 72 and the guide pieces 84 (refer to Figs. 4, 5).

The pressing portion 85c of the spring piece 85 of the holding portion 83 is in engagement with the engagement portion 73 of the head portion 70 so as to press against the engagement portion 73. As this occurs, the head portion 70 is positioned in the radial direction with respect to the holding portion 83 by the pressing portion 85c being brought into engagement with a predetermined recessed position of the engagement portion 73. By this configuration, the head portion 70 is held by the guide pieces 84 and the spring piece 85 therebetween, whereby the dislocation of the head portion 70 is suppressed.

As this occurs, the cover member 80 is disposed so that a vehicle inner side end face 82p in the axial direction of the cover portion 82 forms the same plane as a vehicle inner side end face 52b in the axial direction of the outer ring 52. By this configuration, the head portion 70 can be fixed so that a lower portion 70c of the head portion 70 is brought into abutment (contact) with the vehicle inner side end face 52b of the outer ring 52. Consequently, the pressure from the spring piece 85 can be received by the outer ring 52, thereby making it possible to enhance further the stability in holding the head portion 70. As is shown in Fig. 3, the vehicle inner side end face 52b may be formed in a position which is spaced apart from the head portion 70 (in an offset position) as is shown by a vehicle inner side end face 52b' of the outer ring 52 which is represented by a broken line, and as this occurs, the assembling properties are enhanced.

The rotation speed detector 6 can be mounted in a stable manner by the construction described above even though a reduction in width of the bearing in the hub unit 1 is realized by restricting an axial dimension of the bearing.

The invention is not limited to the embodiment that has been described heretofore, and hence, the invention can be applied to embodiments which are altered variously in accordance with objects and applications without departing from the scope of the invention. For example, in the embodiment, while the rotation speed detector 6 is described as being applied to the hub unit 1 of the drive axle of the motor vehicle, the invention may be applied to a hub unit for a driven axle.

### (Second Embodiment)

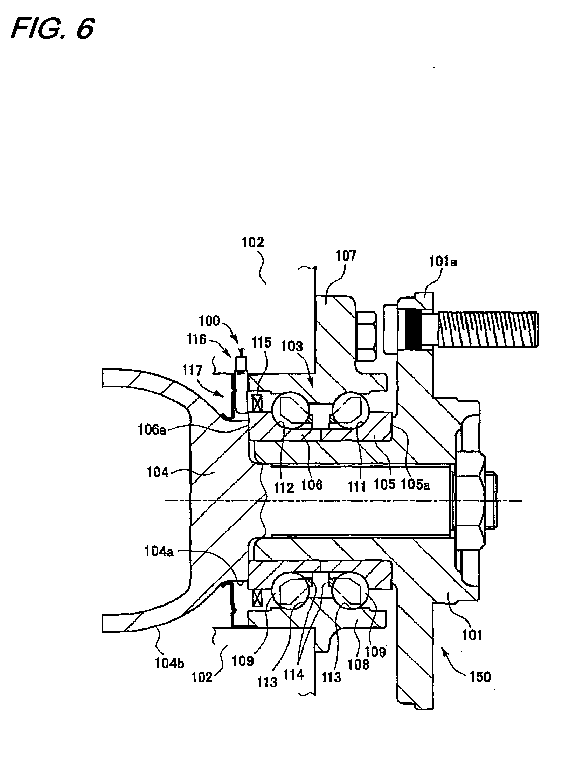

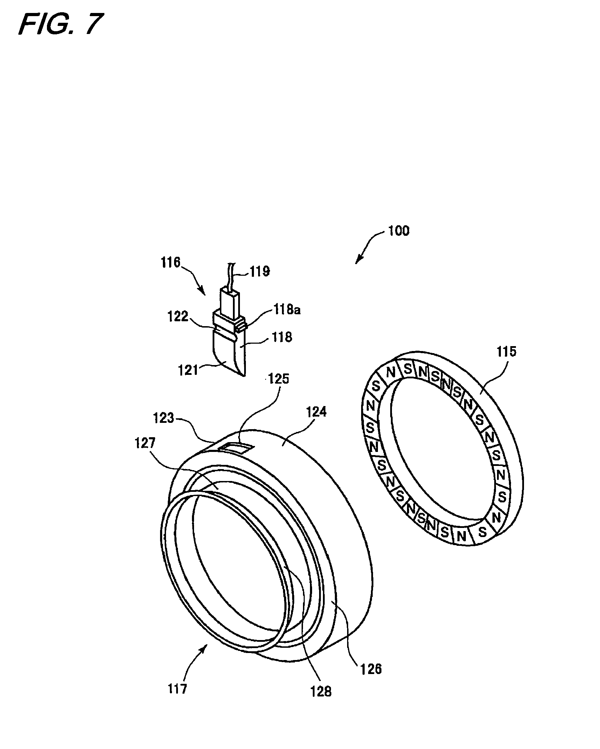

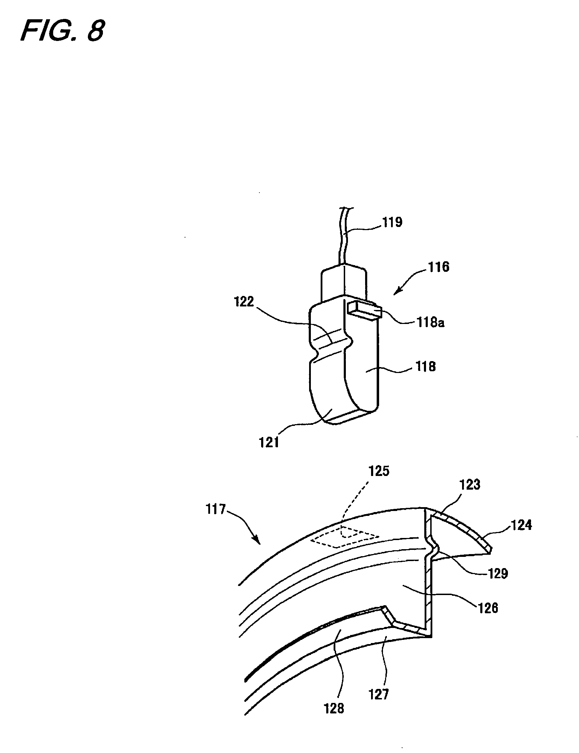

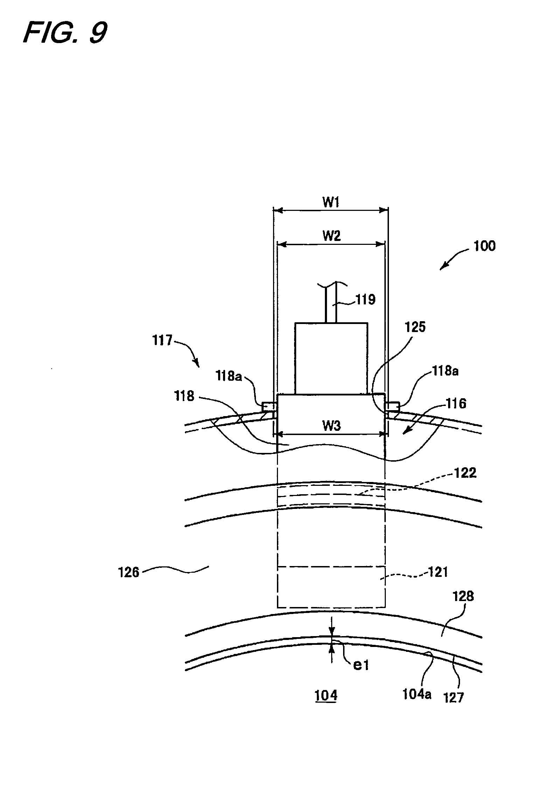

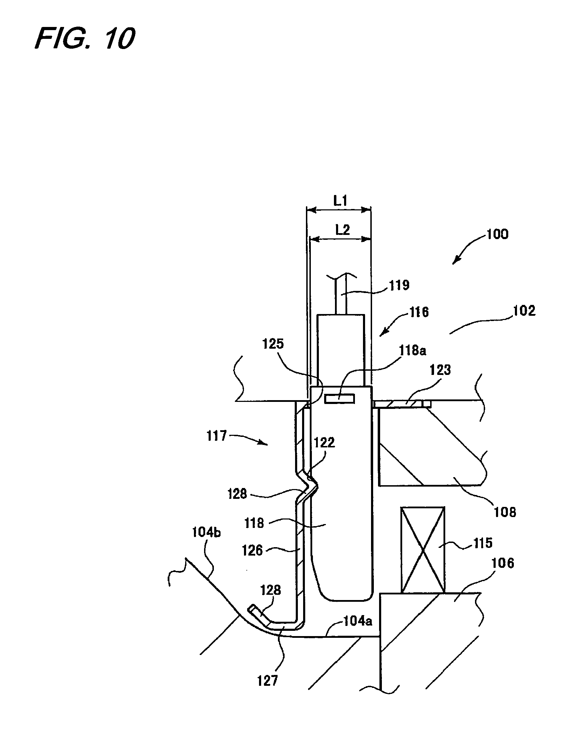

A second embodiment of the invention will be described. Fig. 6 is a front sectional view of a hub unit 150 in which a rotation speed detector 100 of the hub unit according to a second embodiment of the invention is mounted, Fig. 7 is an exploded perspective view of the rotation speed detector 100 as viewed form a vehicle outer side, Fig. 8 is a perspective view of a cover member 117 with a sensor 116 removed therefrom, Fig. 9 is a front view of the rotation speed detector 100 and the Fig. 10 is a side sectional view of the same detector.

A rotation speed detector 100 of the second embodiment of the invention will be described. Firstly, referring to Fig. 6, a hub unit 150 of the vehicle will be described. In Fig. 6, a right-hand side of the figure denotes a "vehicle outer side," and a left-hand side of the figure denotes a "vehicle inner side." The hub unit 150 of this embodiment includes a hub wheel 101 and a rolling bearing 103 for supporting rotatably the hub wheel 101 relative to a vehicle body (an axle housing 102) and is interposed between the axle housing 102 and a constant velocity joint 104 (CVJ). A vehicle outer side end portion of the constant velocity joint 104 is spline fitted in the hub wheel 101, so that a drive force of the constant velocity joint 104 is transmitted to a wheel (not shown) which is mounted on a flange portion 101a of the hub wheel 101. A portion of the constant velocity joint 104 which is other than the spline fitted portion includes a straight outer circumferential portion 104a whose outside diameter stays constant and a tapered outer circumferential portion 104b whose outside diameter increases gradually as the portion extends towards a vehicle inner side end face. When used in this specification, an "axle" includes concepts of both the hub wheel 101 and the constant velocity joint 104.

The rolling bearing 103 will be described. As is shown in Fig. 6, the rolling bearing 103 of this embodiment is a double row angular contact ball bearing and includes a pair of inner rings (a vehicle outer side inner ring 105 and a vehicle inner side inner ring 106) which are press fitted on an outer circumferential surface of the hub wheel 101 and are pressed in the axial direction by the constant velocity joint 104 to thereby be allowed to rotate together with the hub wheel 101, an outer ring 108 which is fixed to the axle housing 102 via a mounting flange portion 107, and a plurality of rolling elements (balls 109) which are interposed between the pair of inner rings 105, 106 and the outer ring 108. The inner rings 105, 106 are each made up of a larger diameter portion and a small diameter portion which are joined together continuously, and inner ring raceway surfaces 111, 112 are provided at a joint portion therebetween on which the balls 109 are allowed to roll. A large diameter portion side end face portion 105a (a vehicle outer side end face portion) of the vehicle outer side inner ring 105 is brought into abutment with a lower end portion of the flange portion 101 a of the hub wheel 101. A large diameter portion side end face portion 106a (a vehicle inner side end face portion) of the vehicle inner side inner ring 106 is brought into abutment with the constant velocity joint 104. Respective small diameter portion side end face portions of the inner rings 105, 106 are disposed to face each other in a butt joint manner.

Similarly, outer ring raceway surfaces 113 are formed on an inner circumferential surface of the outer ring 108. The plurality of balls 109 are retained by cages 114.

The rotation speed detector 100 will be described. As is shown in Figs. 7 and 8, the rotation speed detector 100 of this embodiment includes a pulser ring 115 which rotates together with the hub wheel 101, a sensor 116 for detecting a rotation speed of the pulser ring 115 (a rotation speed of the wheel), and a ring-shaped cover member 117 for supporting the sensor 116. The pulser ring 115 has a ring shape and N poles and S poles are magnetized alternately in a circumferential direction on the pulser ring 115. The pulser ring 115 is fixed to an outer circumferential surface of the large diameter portion of the vehicle inner side inner ring 106 (refer to Fig. 6). By this configuration, the pulser ring 115 is allowed to rotate together with the inner ring 106 (that is, the hub wheel 101).

As is shown in Figs. 7 and 8, the sensor 116 includes a head portion 118 and a lead wire 119. A sloping surface portion 121 is formed on a front surface portion (a vehicle inner side surface with the sensor 116 mounted accordingly) of the head portion 118 at a distal end portion thereof. A concave groove portion 122 is formed on the front surface portion of the head portion 118 in a direction which is at right angles to a longitudinal direction of the head portion 118. Further, a pair of stopper portions 118a are provided on both side surface portions of the head portion 118 so as to project in a width direction.

As is shown in Fig. 6, the cover member 117 is fixed in place by a connecting portion 124 provided at an axial end portion (a vehicle outer side end portion) of a short cylindrical main body portion 123 being press fitted in a gap defined between the axle housing 102 and the outer ring 108. As is shown in Figs. 7 and 8, a sensor mounting hole 125 is provided in a radial direction in a predetermined position of the main body portion 123 so that the head portion 118 of the sensor 116 is inserted therethrough. As is shown in Fig. 9, assuming that an inner width (a circumferential length) of the sensor mounting hole 125 is referred to as W1 and a width of the head portion 118 of the sensor 116 is referred to as W2, the inner width W1 of the sensor mounting hole 125 is almost the same as the width W2 of the head portion 118. A width W3 of a portion of the head portion 118 where the pair of stopper portions 118a are provided is larger than the inner width W1 of the main body portion 123 of the cover member 117. Namely, W1 < W2 < W3. As is shown in Fig. 10, assuming that an axial length of the sensor mounting hole 125 is referred to as L1 and a thickness of the head portion 118 of the sensor 116 is referred to as L2, the length L1 of the sensor mounting hole 125 is slightly larger than the thickness L2 of the head portion 118.

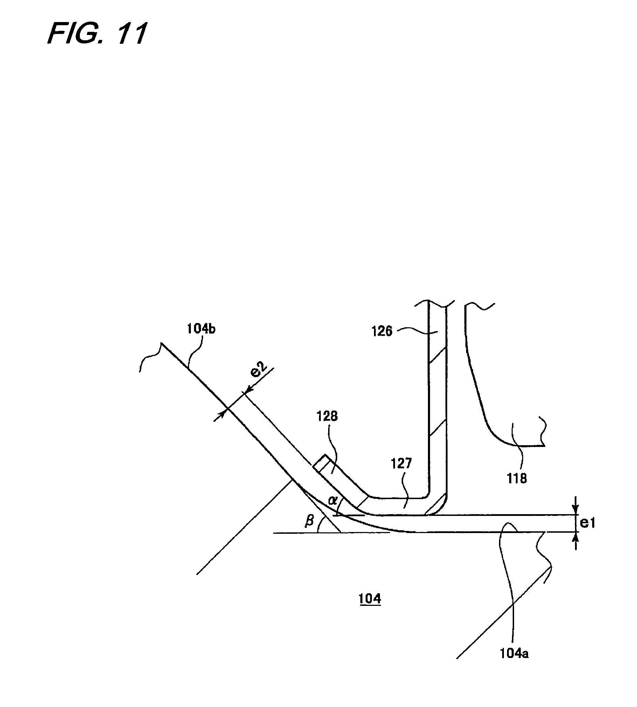

An annular circumferential wall portion 126 is provided at the other axial end portion (a vehicle inner side end portion) of the main body portion 123 of the cover member 117 so as to extend radially inwards (towards an axis of the constant velocity joint 104). As is shown in Figs. 10 and 11, a distal end portion (a lower end portion) of the circumferential wall portion 126 is disposed directly above the straight outer circumferential portion 104a of the constant velocity joint 104 so as to define a minute gap e1 (a labyrinth gap) defined therebetween and is bent at almost right angles towards a vehicle inner side along the straight outer circumferential portion 104a, so as to form a first bent portion 127. A distal end portion of the first bent portion 127 is disposed directly above a connecting portion between the straight outer circumferential portion 104a and the tapered outer circumferential portion 104b of the constant velocity joint 104 and is bent towards the vehicle inner side along the tapered outer circumferential portion 104b, so as to form a second bent portion 128. A minute gap e2 (a labyrinth gap) is defined between the second bent portion 128 and the tapered outer circumferential portion 104b of the axle 104. Here, the respective gaps e1, e2 desirably have a gap size of 0.1 to 0.5 mm. By adopting this configuration, the outer circumferential surface (the straight outer circumferential portion 104a and the tapered outer circumferential portion 104b) of the constant velocity joint 104 is covered over a large area by the first and second bent portions 127, 128 via the minute gaps e1, e2, whereby foreign matters which flow down along the outer circumferential surface of the constant velocity joint 104 are made difficult to intrude the circumferential portion of the head portion 118 of the sensor 116.

An inclination angle α of the second bent portion 128 relative to the first bent portion 127 of the circumferential wall portion 126 is larger than an inclination angle β of the tapered outer circumferential portion 104b relative to the straight outer circumferential portion 104a of the constant velocity joint 104. By this configuration, a fear of the second bent portion 128 of the circumferential wall portion 126 being brought into contact with the outer circumferential surface of the constant velocity joint 104 can be eliminated in an ensured manner.

An elongated projection 129 projecting towards the connecting portion 124 side is provided on a rear surface portion (a vehicle outer side surface in a mounted condition) of the circumferential wall portion 126 of the cover member 117 so as to extend along a full circumference of the circumferential wall portion 126. By this configuration, a concave grove is provided on a front surface portion of the circumferential wall portion 126 so as to extend along the full circumference of the circumferential wall portion 126. This elongated projection 129 has a function to press the head portion 118 of the sensor 116 which is inserted through the inserted sensor mounting hole 125 in the main body portion 123 in the axial direction.

The function of the rotation speed detector 100 of the embodiment will be described. As is shown in Figs. 6 and 10, the pulser ring 115 is mounted on an outer circumferential surface of the vehicle inner side inner ring 106. The inner ring 106 is press fitted on the hub wheel 101 on which a wheel (not shown) is mounted. Because of this, the pulser ring 115 rotates together with the wheel. The connecting portion 124 of the main body portion of the cover member 117 is press fitted in the gap defined between the axle housing 102 and the outer ring 108. Because of this, the cover member 117 is mounted on a vehicle body (the axle housing 102) in a stationary manner.

The head portion 118 of the sensor 116 is inserted into the sensor mounting hole 125 provided in the main body portion 123 of the cover member 117. Since the sloping surface portion 121 is formed at the distal end portion of the head portion 118, the head portion 118 is easily inserted through the sensor mounting hole 125. The head portion 118 inserted through the sensor mounting hole 125 allows the pair of stopper portions 118a to be brought into abutment with an outer circumferential surface of the main body portion 123 of the cover member 117. The head portion 118 of the sensor 116 is positioned in the radial direction by the abutment of the stopper portions 118a with the main body portion 123. In this state, the elongated projection 129 of the circumferential wall portion 126 fits in the concave groove portion 122 on the head portion 118, so as to press the head portion 118 in the axial direction. By the head portion 118 being pressed in the axial direction by the elongate projection 129, the head portion 118 of the sensor 116 is positioned in the axial direction and the head portion 118 is positioned in the radial direction in a more ensured manner, whereby the prevention of dislocation of the head portion 118 is realized. Since the width W2 of the head portion 118 is almost the same as the inner width W1 of the sensor mounting hole 125, there occurs no such situation that the head portion 118 is shifted in the circumferential direction. By this configuration, the head portion 118 of the sensor 116 is positioned in the circumferential direction. As a result of what has been described heretofore, the head portion 118 of the sensor 116 is held in the cover member 117 while being positioned with respect to the axial direction, radial direction and circumferential direction. In this state, the pulser ring 115 and the head portion 118 are disposed so as to face each other.

When the cover member 117 is mounted on the axle housing 102, the first and second bent portions 127, 128 which are provided at the distal end portion 126a of the circumferential wall portion 126 are disposed so as to be spaced by the minute gaps e1, e2 (the labyrinth gaps) apart from the outer circumferential surface (the straight outer circumferential portion 104a and the tapered circumferential portion 104b) of the constant velocity joint 104. Because of this, a peripheral space portion of the head portion 118 of the sensor 116 is closed, whereby foreign matters (sand, mud, dirty, rain water and the like) which flow down along the outer circumferential surface of the constant velocity joint 104 are prevented from intruding the periphery of the sensor 116. Since the first and second bent portions 127, 128 are disposed so as not to contact the outer circumferential surface of the constant velocity joint 104, there is caused no such fear that the outer circumferential surface of the constant velocity joint 104 is worn or the cover member is shifted. As a result of what has been described heretofore, since the detection accuracy of the sensor 116 is prevented from being affected badly by accumulation of the foreign matters which intrude the periphery of the sensor 116 or adhesion thereof to the pulser ring 115 or the head portion 118 of the sensor 116, highly accurate detection results can be obtained at all times.

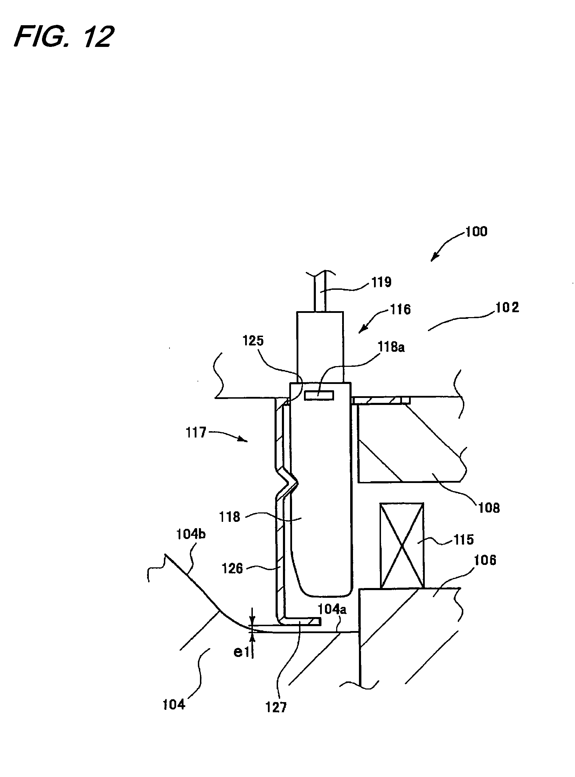

In the cover member 117 of the second embodiment that has been described heretofore, the distal end portion of the circumferential wall portion 126 is described as being bent towards the vehicle inner side. However, as with a cover member 117 shown in Fig. 12, a distal end portion of a circumferential wall portion 126 may be bent towards the vehicle outer side.

With either of the cover members 117, since the distal end portion of the circumferential wall portion 126 only has to be bent, the fabrication of the cover member 117 is facilitated.

### (Third Embodiment)

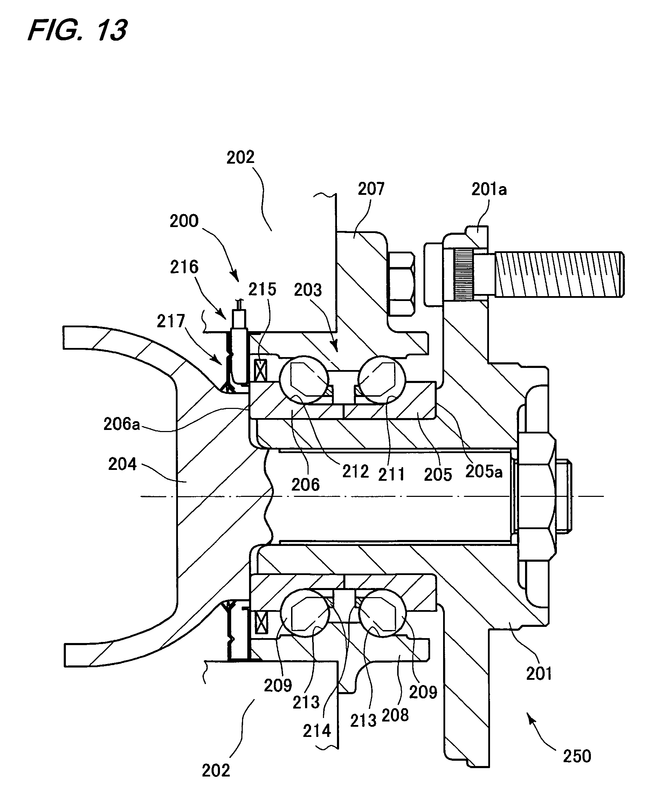

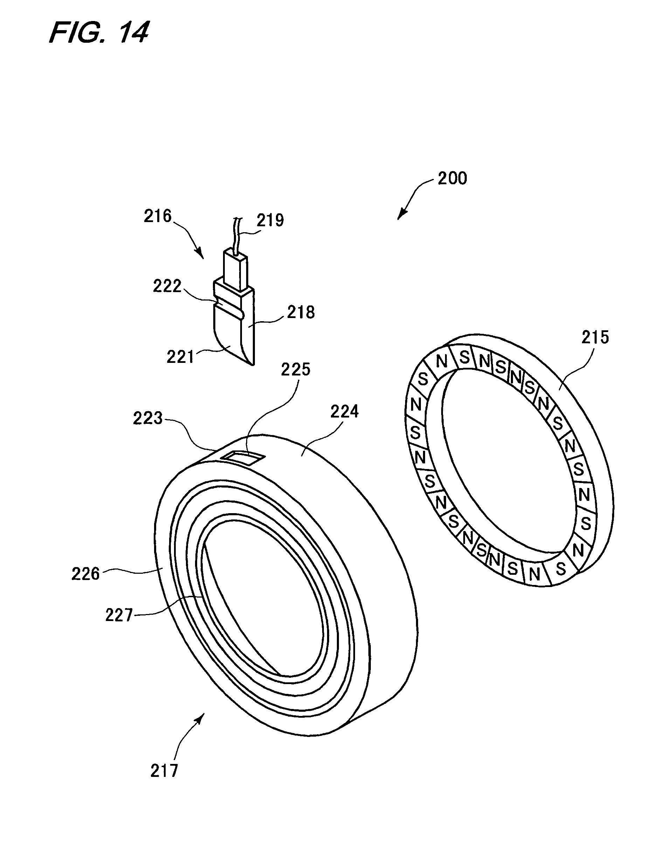

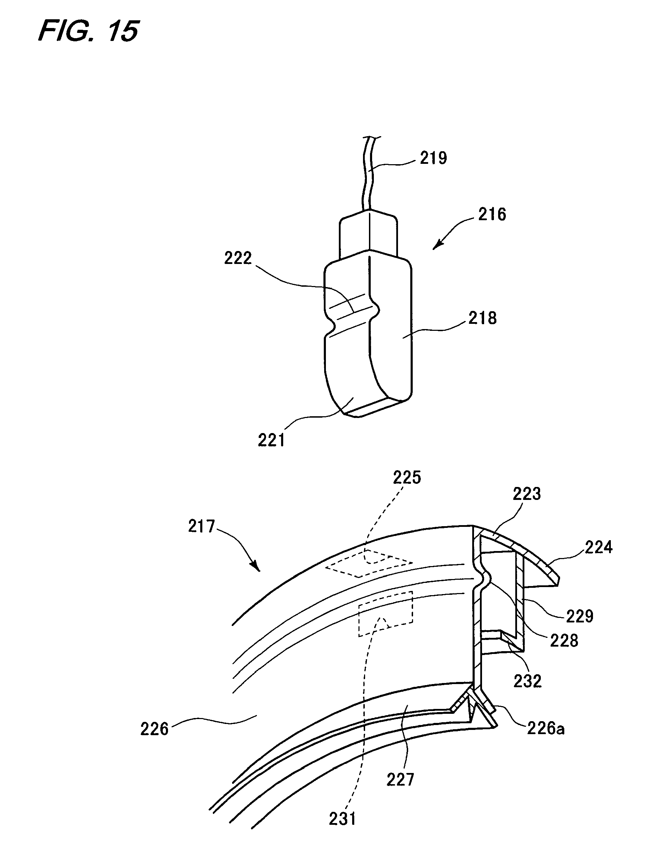

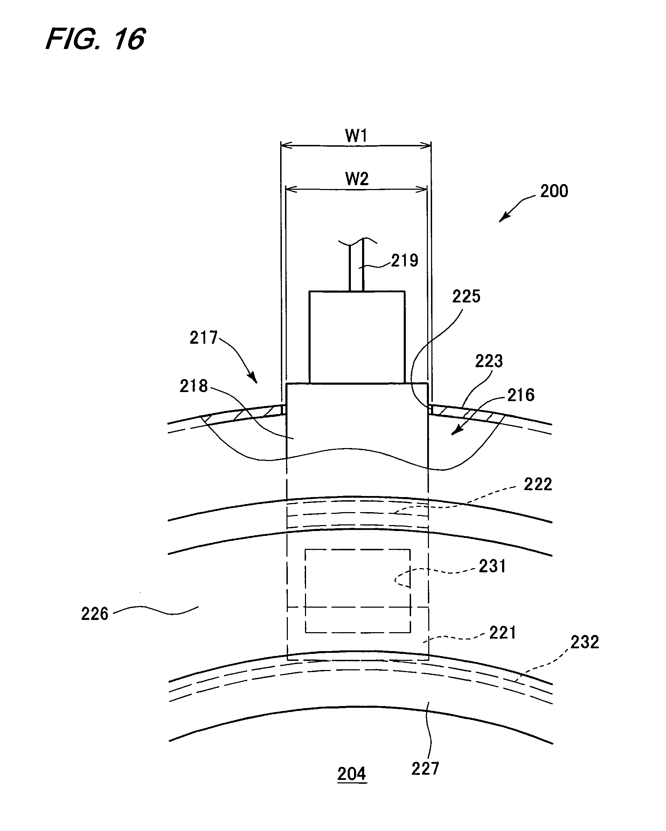

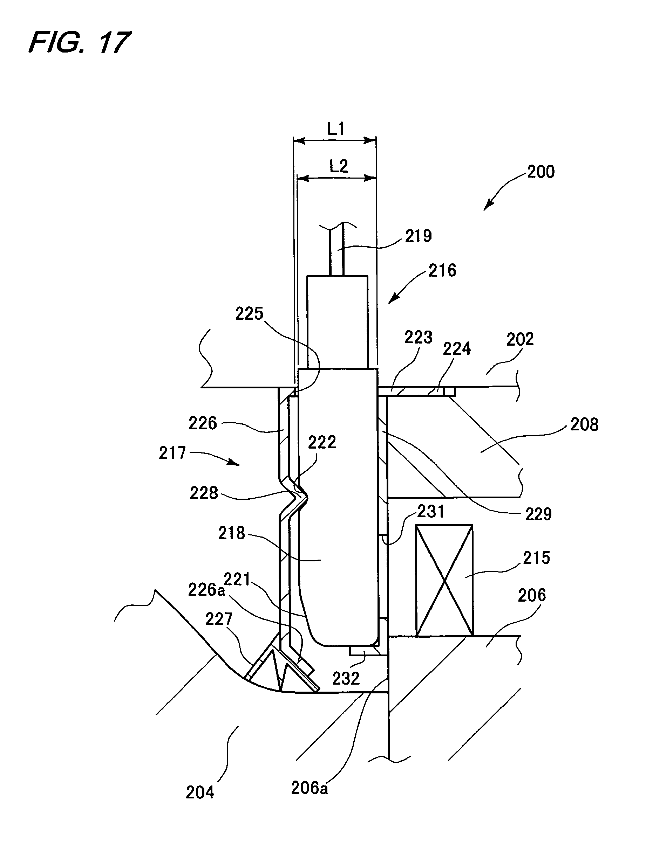

A third embodiment of the invention will be described. Fig. 13 is a front sectional view of a hub unit 250 in which a rotation speed detector 200 of the hub unit according to a third embodiment of the invention is mounted, Fig. 14 is an exploded perspective view of the rotation speed detector 200 as viewed from a vehicle outer side, Fig. 15 is a perspective view of a cover member 217 with a sensor 216 removed therefrom, Fig. 16 is a front view of the rotation speed detector 200, and Fig. 17 is a side sectional view of the same detector.

A rotation speed detector 200 of a hub unit according to the third embodiment of the invention will be described. Firstly, referring to Fig. 13, a hub unit 250 of the vehicle will be described. In Fig. 13, a right hand side as viewed in the figure denotes a "vehicle outer side" and similarly, a left hand side denotes a "vehicle inner side." The hub unit 250 of this embodiment includes a hub wheel 201 and a rolling bearing 203 for supporting rotatably the hub wheel 201 relative to a vehicle body (an axle housing 202) and is interposed between the axle housing 202 and a constant velocity joint 204 (CVJ). A vehicle outer side end portion of the constant velocity joint 204 is spline fitted in the hub wheel 201, so that a drive force of the constant velocity joint 204 is transmitted to a wheel (not shown) mounted on a flange portion 201a of the hub wheel 201. An outside diameter of the constant velocity joint 204 on a vehicle inner side increases gradually as it extends towards a vehicle inner side end face thereof. When used in this specification, an "axle" includes concepts of both the hub wheel 201 and the constant velocity joint 204.

The rolling bearing 203 will be described. As is shown in Fig. 13, the rolling bearing 203 of this embodiment is a double row angular contact ball bearing and includes a pair of inner rings (a vehicle outer side inner ring 205 and a vehicle inner side inner ring 206) which are press fitted on an outer circumferential surface of the hub wheel 201 and are pressed in the axial direction by the constant velocity joint 204 to thereby be allowed to rotate together with the hub wheel 201, an outer ring 208 which is fixed to the axle housing 202 via a mounting flange portion 207, and a plurality of rolling elements (balls 209) which are interposed between the pair of inner rings 205, 206 and the outer ring 208. The inner rings 205, 206 are each made up of a larger diameter portion and a small diameter portion which are joined together continuously, and inner ring raceway surfaces 211, 212 are provided at a joint portion therebetween on which the balls 209 are allowed to roll. A large diameter portion side end face portion 205a (a vehicle outer side end face portion) of the vehicle outer side inner ring 205 is brought into abutment with a lower end portion of the flange portion 201a of the hub wheel 201. A large diameter portion side end face portion 206a (a vehicle inner side end face portion) of the vehicle inner side inner ring 206 is brought into abutment with the constant velocity joint 204. Respective small diameter portion side end face portions of the inner rings 205, 206 are disposed to face each other in a butt joint manner.

Similarly, outer ring raceway surfaces 213 are formed on an inner circumferential surface of the outer ring 208. The plurality of balls 209 are retained by cages 214.

The rotation speed detector 200 will be described. As is shown in Figs. 14 and 15, the rotation speed detector 200 of the third embodiment includes a pulser ring 215 which rotates together with the hub wheel 201, a sensor 216 for detecting a rotation speed of the pulser ring 215 (a rotation speed of the wheel), and a ring-shaped cover member 217 for supporting the sensor 216. The pulser ring 215 has a ring shape and N poles and S poles are magnetized alternately in a circumferential direction on the pulser ring 215. The pulser ring 215 is fixed to an outer circumferential surface of the large diameter portion of the vehicle inner side inner ring 206 (refer to Fig. 13). By this configuration, the pulser ring 215 is allowed to rotate together with the inner ring 206 (that is, the hub wheel 201).

As is shown in Figs. 14 and 15, the sensor 216 includes a head portion 218 and a lead wire 219. A sloping surface portion 221 is formed on a front surface portion (a vehicle inner side surface with the sensor 216 mounted accordingly) of the head portion 218 at a distal end portion thereof. A concave groove portion 222 is formed on the front surface portion of the head portion 218 in a direction which is at right angles to a longitudinal direction of the head portion 218.

As is shown in Fig. 13, the cover member 217 is fixed in place by a connecting portion 224 provided at an axial end portion (a vehicle outer side end portion) of a short cylindrical main body portion 223 being press fitted in a gap defined between the axle housing 202 and the outer ring 208. As is shown in Figs. 14 and 15, a sensor mounting hole 225 is provided in a radial direction in a predetermined position of the main body portion 223 so that the head portion 218 of the sensor 216 is inserted therethrough. As is shown in Fig. 16, assuming that an inner width (a circumferential length) of the sensor mounting hole 225 is referred to as W1 and a width of the head portion 218 of he sensor 216 is referred to as W2, the inner width W1 of the sensor mounting hole 225 is slightly larger than the width W2 of the head portion 218. As is shown in Fig. 17, assuming that an axial length of the sensor mounting hole 225 is referred to as L1 and a thickness of the head portion 218 of the sensor 216 is referred to as L2, the length L1 of the sensor mounting hole 225 is slightly larger than the thickness L2 of the head portion 218.

An annular circumferential wall portion 226 is provided at the other axial end portion (a vehicle outer side end portion) of the main body portion 223 of the cover member 217 so as to extend radially inwards (towards an axis of the constant velocity joint 204). A distal end portion 226a of the circumferential wall portion 226 is bent at a predetermined angle towards a vehicle outer side, and a seal member 227 is secured to the distal end portion 226a along a full circumference thereof. This circumferential wall portion 226 has a length which enables the seal member 227 which is secured to the distal end portion 226a to be brought into sliding contact with an outer circumferential surface of the constant velocity joint 204 when the cover member 217 is press fitted in the gap defined between the axle housing 202 and the outer ring 208.

An elongated projection 228 projecting towards the connecting portion 124 side is provided on a rear surface portion (a vehicle outer side surface in a mounted condition) of the circumferential wall portion 226 of the cover member 217 so as to extend along a full circumference of the circumferential wall portion 226. By this configuration, a concave grove is provided on a front surface portion of the circumferential wall portion 226 so as to extend along the full circumference of the circumferential wall portion 226. This elongated projection 228 has a function to press the head portion 218 of the sensor 216 which is inserted through the inserted sensor mounting hole 225 in the main body portion 223 in the axial direction.

A guide wall portion 229 is provided on a position on an inner circumferential surface of the main body portion 223 of the cover member 217 which lies between the connecting portion 224 and the circumferential wall portion 226 so as to extend therefrom radially inwards. In the case of the cover member 217 of this embodiment, the guide wall portion 229 is secured to the inner circumferential surface of the main body portion 223 through welding. A detection hole 231 is provided at a portion on the guide wall portion 229 corresponding to the sensor mounting hole 225 in the main body portion 223 (a portion on which the head portion 218 of the sensor 216 is disposed), and a distal end portion of the guide wall portion 229 is bent towards the circumferential wall portion 226, a stopper portion 232 being formed at the portion so bent. The head portion 218 of the sensor 216 which is inserted through the sensor mounting hole 225 in the main body portion 223 of the cover member 217 moves radially inwards while forcibly expanding (elastically deforming) the circumferential wall portion 226 by being guided by the guide wall portion 229, and the distal end portion thereof is brought into abutment with the stopper portion 232. In this condition, the circumferential wall portion 226 elastically restores, and the elongated projection 228 fits in the concave groove portion 222 on the head portion 218. By this action, the head portion 218 of the sensor 216 is positioned in the axial direction and the radial direction to thereby be held in place.

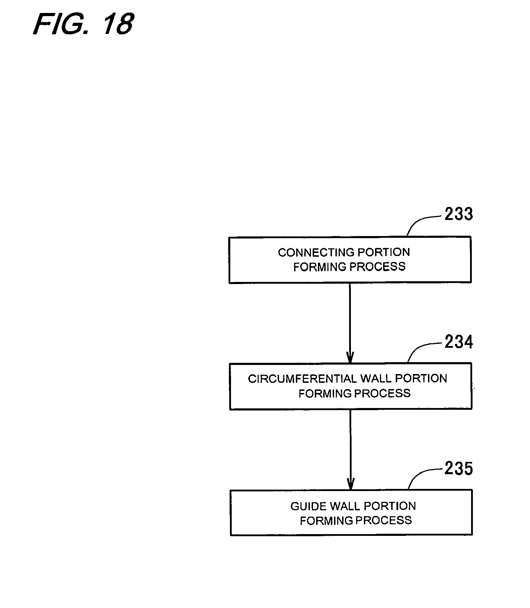

For example, as is shown in Fig. 18, the cover member 217 is fabricated through a connecting portion forming process 233 of forming a cylindrical connecting portion 224, a circumferential wall forming process 234 of forming a circumferential wall portion 226 by bending an axial end portion of the connecting portion 224 radially inwards and a guide wall portion forming process 235 of welding an outer circumferential surface of a disc-shaped guide wall portion 229 to an inner circumferential surface of the connecting portion 224 in parallel with the circumferential wall portion 226. A process of mounting a seal member 227 at a distal end portion 226a of the circumferential wall portion 226 may be implemented before welding the connecting portion 224 and the guide wall portion 229 together or after the welding of the two portions. In addition, both the portions may be connected together by welding the circumferential wall portion 226 to one end portion of the connecting portion 224.

The function of the rotation speed detector 200 of the hub unit of the embodiment will be described. As is shown in Figs. 13 and 17, the pulser ring 215 is mounted on an outer circumferential surface of the vehicle inner side inner ring 206. The inner ring 206 is press fitted on the hub wheel 201 on which a wheel (not shown) is mounted. Because of this, the pulser ring 215 rotates together with the wheel. The connecting portion 224 of the min body portion of the cover 217 is press fitted in the gap defined between the axle housing 202 and the outer ring 208. Because of this, the cover member 217 is mounted on a vehicle body (the axle housing 202) in a stationary manner.

The head portion 218 of the sensor 216 is inserted into the sensor mounting hole 225 provided in the main body portion 223 of the cover member 217. Since the sloping surface portion 221 is formed at the distal end portion of the head portion 218, the head portion 218 is easily inserted through the sensor mounting hole 225. The head portion 218 brings the distal end portion thereof into abutment with the stopper portion 232 while being guided by the guide wall portion 229. By this action, the head portion 218 of the sensor 216 is positioned in the radial direction. In this state, the elongated projection 228 of the circumferential wall portion 226 fits in the concave groove portion 222 on the head portion 218, so as to press the head portion 218 in the axial direction. By the head portion 218 being pressed in the axial direction by the elongate projection 228, the head portion 218 of the sensor 216 is positioned in the axial direction and the head portion 218 is positioned in the radial direction in a more ensured manner, whereby the prevention of dislocation of the head portion 218 is realized. Since the width W2 of the head portion 218 is only slightly smaller than the inner width W1 of the sensor mounting hole 225, the head portion 218 shifts slightly in the circumferential direction. By this configuration, the head portion 218 of the sensor 216 is positioned in the circumferential direction. As a result of what has been described heretofore, the head portion 218 of the sensor 216 is held in the cover member 217 while being positioned with respect to the axial direction, radial direction and circumferential direction. In this state, the pulser ring 215 and the head portion 218 are disposed so as to face each other. In order to make least the circumferential shift of the head portion 218, the inner width W1 of the sensor mounting hole 225 is desirably made almost the same as the width W2 of the head portion 218.

When the cover member 217 is mounted on the axle housing 202, the seal member 227 mounted at the distal end portion 226a of the circumferential wall portion 226 is brought into sliding contact with the outer circumferential surface of the constant velocity joint 204. By the sliding contact of the distal end portion 226a with the constant velocity joint 204, a peripheral space portion of the head portion 218 of the sensor 216 is closed, whereby foreign matters (sand, mud, dirty, rain water and the like) which flow down along the outer circumferential surface of the constant velocity joint 204 are prevented from intruding the periphery of the sensor 216. Namely, since the detection accuracy of the sensor 216 is prevented from being affected badly by accumulation of the foreign matters which intrude the periphery of the sensor 216 or adhesion thereof to the pulser ring 215 or the head portion 218 of the sensor 216, highly accurate detection results can be obtained at all times.

## Claims

1. A hub unit having a stationary-side member mounted on a vehicle body side so as not to rotate for supporting a wheel rotatably on a vehicle body, a rotating-side member disposed concentrically with the stationary-side member and mounted on a wheel side so as to rotate together with the wheel on a raceway surface of the stationary-side member via rolling elements, and a rotation speed detector mounted at vehicle inner side end portions of the rotating-side member and the stationary-side member for detecting a change in rotation speed of the wheel, wherein
the rotation speed detector comprises:
a pulser ring including a detected portion and adapted to rotate together with the rotating-side member;
a head portion of a sensor for detecting a change in rotation speed of the wheel via the detected portion of the pulser ring; and
a cover member comprising a fixed portion fitted in the stationary-side member so as to be fixed thereto and an annular cover portion which extends from one end of the fixed portion towards the rotating-side member, and wherein
a seal portion is formed between an inner circumferential end of the cover portion and the rotating-side member.

2. A hub unit as set forth in Claim 1, wherein
the seal portion seals a gap between the pulser ring and the cover member at a vehicle inner side end portion in an axial direction of a rolling element disposition space which is defined between the rotating-side member and the stationary-side member.

3. A hub unit as set forth in Claim 2, wherein
the seal portion includes a first seal member which is fixed to a vehicle outer side of the detected portion of the pulser ring and an outside diameter end portion of which is incorporated in a seal groove formed on an inner circumferential portion of a fixed portion of the stationary-side member of the cover member and a second seal member which is fixed to a vehicle outer side of the cover portion of the cover member and an inside diameter end portion of which is incorporated in a seal groove formed on the pulser ring or the rotating-side member.

4. A hub unit as set forth in Claim 1, wherein
the seal portion is a labyrinth seal.

5. A hub unit as set forth in Claim 1, wherein
the cover member comprises:
a cylindrical main body portion in which a sensor mounting hole through which the sensor is inserted is provided in a radial direction; and
a circumferential wall portion which is provided on an axial side of the main body portion to extend radially inwards therefrom and a distal end portion of which is bent along an outer circumferential surface of the axle for a bent portion to be formed at the distal end portion, wherein
a gap is defined between the bent portion and the outer circumferential surface of the axle.

6. A hub unit as set forth in Claim 5, wherein
the axle has a straight outer circumferential portion an outside diameter of which stays the same in the axial direction and a tapered outer circumferential portion an outside diameter of which increases continuously towards the vehicle inner side, wherein
the circumferential wall portion is disposed directly above the straight outer circumferential portion of the axle, and wherein
the bent portion comprises a first bent portion which is bent towards the vehicle inner side along the straight outer circumferential portion of the axle and a second bent portion which is bent towards the vehicle inner side along the tapered outer circumferential portion from a position lying directly above a connecting portion on the first bent portion between the straight outer circumferential portion and the tapered outer circumferential portion of the axle.

7. A hub unit as set forth in Claim 6, wherein
an inclination angle of the second bent portion relative to the first bent portion is larger than an inclination angle of the tapered outer circumferential portion relative to the straight outer circumferential portion of the axle.

8. A hub unit as set forth in Claim 1, wherein
the cover member comprises:
a cylindrical main body portion in which a sensor mounting hole through which the sensor is inserted is provided in a radial direction;
a circumferential wall portion which is provided on an axial side of the main body portion to extend radially inwards therefrom and which has a seal member mounted at a distal end portion thereof; and
a guide wall portion which is provided on the other axial side of the main body portion to extend radially inwards therefrom in parallel with the circumferential wall portion for guiding the sensor inserted into the sensor mounting hole in the main body portion,
the seal member of the circumferential wall portion being brought into sliding contact with the outer circumferential surface of the axle with the main body portion mounted on a vehicle body.

9. A hub unit as set forth in Claim 8, wherein
a stopper portion with which the sensor inserted into the sensor mounting hole in the main body portion is brought into abutment is provided at a distal end portion of the guide wall portion.

10. A hub unit as set forth in Claim 8, wherein
the guide wall portion is provided to hold the sensor inserted in the sensor mounting hole by clamping the sensor between itself and the circumferential wall portion, and wherein
an engagement portion is provided on the circumferential wall portion to resiliently press the clamped sensor against the guide wall portion side and is brought into engagement with the sensor in a pressed condition.
